# EUROPÄISCHE PATENTSCHRIFT

(11) **EP 3 394 483 B1**
(45) Veröffentlichungstag und Bekanntmachung des Hinweises auf die Patenterteilung: **29.01.2020**
(21) Anmeldenummer: 16825435.7
(22) Anmeldetag: 23.12.2016
(51) Int. Cl.: F16J 15/16, F16J 15/3208, F16J 15/3212, F16J 15/322, F16J 15/3228, F16J 15/3244

(54) **DICHTUNGSANORDNUNG MIT DICHTFOLIE**
SEAL ARRANGEMENT WITH SEALING FILM
ENSEMBLE D'ÉTANCHÉITÉ COMPRENANT UNE FEUILLE D'ÉTANCHÉITÉ

(30) Priorität: 23.12.2015 DE 102015226705
(43) Veröffentlichungstag der Anmeldung: 31.10.2018
(73) Patentinhaber: Trelleborg Sealing Solutions Germany GmbH, 70565 Stuttgart (DE)
(72) Erfinder: FRANZ, Martin, 72827 Wannweil (DE); HAHN, Bernhard, 73733 Esslingen (DE); KECK, Matthias, 71272 Renningen (DE)
(74) Vertreter: Kohler Schmid Möbus Patentanwälte
(86) Internationale Anmeldenummer: PCT/EP2016/082539
(87) Internationale Veröffentlichungsnummer: WO 2017/109163

(56) Entgegenhaltungen:
- DE-A1- 3 603 210
- GB-A- 1 196 451
- US-A1- 2003 168 817

## Beschreibung

Die Erfindung betrifft eine Dichtungsanordnung mit einer Dichtfolie.

Aus der Praxis sind Dichtungsanordnungen mit zwei Maschinenteilen bekannt, die entlang einer oder um eine Bewegungsachse gegeneinander bewegbar angeordnet sind, wobei eines der beiden Maschinenteile eine Dichtungshaltestruktur und das jeweils andere Maschinenteil eine Dichtfläche ausbildet. Eine an/in der Dichtungshaltestruktur gehalten angeordnete Dichtungseinrichtung dient dem dynamischen Abdichten eines zwischen den beiden Maschinenteilen ausgebildeten Dichtspalts, die ein Dichtelement und ein zu dem Dichtelement separates Vorspannelement umfasst, mittels dessen das Dichtelement in radialer Richtung gegen die Dichtfläche des jeweils anderen Maschinenteils gespannt ist.

Derartige Dichtungsanordnungen haben sich beispielsweise als Rotationsdichtungsanordnungen, bei der beispielsweise eine rotierbar gelagerte Drehwelle gegenüber einem Gehäuse bzw. einem Lagerteil abgedichtet ist, oder auch bei Hydraulikzylindern mit einem innerhalb des Zylinders geführten und translatorisch bewegbaren Kolben, seit langem etabliert.

Bei den am Markt verfügbaren Dichtungsanordnungen unterliegt das Dichtelement nicht zuletzt aufgrund seiner Reibung an der Dichtfläche des jeweiligen Maschinenteils einem Verschleiß. Dies betrifft insbesondere Strukturen des Dichtelements, die für das Dicht- oder auch Fluid-Rückförderverhalten der Dichtungseinrichtungen wesentlich sind. Eine massivere und dementsprechend gegenüber mechanischen Beanspruchungen widerstandsfähigere Ausführung des Dichtteils bzw. Dichtelements birgt weiterhin das Risiko eines frühzeitigen Verschleißes funktionswesentlicher Strukturen. Zusätzlich besteht das Risiko einer thermischen Überbeanspruchung des Dichtelements, weil die im Betrieb zwangsläufig entstehende Reibwärme nicht mehr ausreichend abgeführt werden kann.

Aus der US 2 105 871 A ist eine Rotationsdichtungsanordnung bekannt geworden, bei der die Dichtungseinrichtung ein folienartiges Dichtelement aus Leder oder einem anderen ölbeständigen Material umfasst, welches an der Dichtfläche einer drehbar gelagerten Achse dichtend anliegt. Das Dichtelement wird dabei mittels einer einfachen Wurmfeder gegen die Dichtfläche der Achse gepresst. Diese Bauart ermöglicht zwar eine verbesserte Wärmeabfuhr im Bereich des Dichtungselements. Die Dichtungsanordnung ist jedoch für Hochdruckanwendungen wenig geeignet. Darüber hinaus dürfen die einzelnen in Umfangsrichtung der Achse hintereinanderliegend angeordneten Windungen der Wurmfeder - wenn überhaupt - nur geringfügig voneinander beabstandet sein, um ein ausreichendes Dichtvermögen der Dichtungseinrichtung zu gewährleisten. Ein zuverlässiges Rückschleppvermögen der Dichtungseinrichtung ist dadurch nicht zu realisieren.

DE 36 03 210 A1 offenbart eine weiterentwickelte Dichtungsanordnung, bei der die Dichtungseinrichtung ein Dichtelement und ein zu dem Dichtelement separates Vorspannelement umfasst. Das Dichtelement ist hier durch eine elastisch verformbare Dichtfolie aus Polytetrafluorethylen gebildet, und das Vorspannelement bildet dichtfolienseitig eine Prägestruktur in Form eines Ringwulstes aus. Die Prägestruktur drückt sich derart in die Dichtfolie ein, dass die Dichtfolie mit einem zur Prägestruktur des Vorspannelements korrespondierenden Kontaktpressungsverlauf an der Dichtfläche anliegt. Durch das begrenzte Rückschleppvermögen der Dichtungseinrichtung sind die mögliche Einsatzbreite sowie auch die Standzeit der Dichtungsanordnung begrenzt.

Es ist deshalb die Aufgabe der Erfindung eine Dichtungsanordnung anzugeben, die kostengünstig herzustellen ist und bei der die Dichtungseinrichtung ein verbessertes Rückschleppvermögen bei einer zugleich verbesserten Standzeit aufweist.

Diese Aufgabe wird durch die Dichtungsanordnung mit den in Patentanspruch 1 angegebenen Merkmalen gelöst. Bevorzugte Weiterbildungen der Erfindung sind in den Unteransprüchen sowie der Beschreibung angegeben.

Bei der erfindungsgemäßen Dichtungseinrichtung ist das Dichtelement durch eine elastisch verformbare Dichtfolie, d.h. als ein Foliendichtelement, gebildet. Das Vorspannelement bildet eine Prägestruktur aus, die sich derart in die Dichtfolie eindrückt, dass die Dichtfolie mit einer zur Prägestruktur des Vorspannelements korrespondierenden Kontakt(flächen)pressung bzw. einem dazu korrespondierenden Kontaktpressungsverlauf an der Dichtfläche anliegt. Für das Dicht- bzw. Rückfördervermögen der Dichtungseinrichtung maßgebliche Strukturen der Dichtungseinrichtung, d.h. hier die Prägestruktur des Vorspannelements, unterliegen dadurch keinem direkten reibungsbedingten Verschleiß mehr. Die Dichtfolie ist gegenüber herkömmlichen Dichtungselementen wesentlich dünner ausgeführt, so dass im Betrieb der Dichtungsanordnung eine anfallende Reibungswärme zügig abgeführt werden kann. Insgesamt kann die Standzeit der Dichtungseinrichtung dadurch deutlich verbessert werden. Dadurch, dass die Dichtfolie elastisch verformbar ist, kann selbst bei Hochdruckanwendungen, bei dem im Dichtspalt ein Fluiddruck von mehreren hundert Bar wirkt, ein ausreichendes Dichtvermögen realisiert werden. Die Dichtfolie weist vorzugsweise eine Foliendicke zwischen 0,1 Millimeter und 2 Millimeter, insbesondere zwischen 0,2 Millimeter und 1 Millimeter auf. Dadurch kann selbst ein fein graduierter (abgestufter) Kontaktpressungsverlauf der Dichtfolie an der Dichtfläche realisiert werden. Die Dicke der Dichtfolie ist bevorzugt auf den Durchmesser des bewegbar gelagerten Maschinenteils abgestimmt bzw. ausgerichtet und kann insbesondere bis zu einem Hundertstel des Durchmessers des bewegbar gelagerten Maschinenteils betragen. Darüber hinaus liegt die Dichtfolie dem Vorspannelement im Bereich der Prägestruktur in radialer Richtung vorzugsweise lose an, ist also mit dem die Prägestruktur aufweisenden Umfangsbereich des Vorspannelements weder verklebt, verschweißt oder in anderer Weise direkt an diesem Umfangsbereich befestigt.

Die Dichtungsanordnung kann mit einer in radialer Richtung außendichtenden bzw. einer in radialer Richtung innendichtenden Dichtungseinrichtung ausgeführt sein. Dadurch ergeben sich breite Einsatzmöglichkeiten der Dichtungsanordnung.

Die Prägestruktur des Vorspannelements umfasst zumindest einen ringförmigen Wulst, der von dem Vorspannelement in radialer Richtung vorsteht. Dadurch liegt die Dichtfolie in einem umlaufenden Bereich mit einem Kontaktpressungsverlauf an der Dichtfläche des anderen Maschinenteils an, der dem Kontaktpressungsverlauf einer herkömmlichen Dichtkante entspricht. Der Ringwulst weist dabei erfindungsgemäß eine erste und eine zweite (Seiten-) Flanke auf, die zur Dichtfläche mit unterschiedlichen Flankenwinkeln schräg verlaufend ausgerichtet angeordnet sind. Der Kontaktpressungsverlauf der Dichtfolie ist so bezüglich der beiden Seiten der Dichtungseinrichtung, beispielsweise einer Hochdruckseite der Dichtungsanordnung und einer Niederdruckseite der Dichtungsanordnung, asymmetrisch eingestellt, um funktionell unterschiedliche Flankensteigungen herkömmlicher Dichtkanten zu simulieren. Dadurch kann das Rückfördervermögen der Dichtungseinrichtung - bewegungsrichtungsabhängig - bei einer translatorischen Relativbewegung der beiden Maschinenteile längs der Bewegungsachse dem Bedarf entsprechend eingestellt werden. Bei Kombination eines vorgenannten Gewindes mit einem umlaufenden Ringwulst, bevorzugt am Ende des Gewindes, kann der umlaufende Ringwulst auch mit einem symmetrischen Querschnitt ausgeführt sein, d. h. mit zur Dichtfläche beidseitig gleichen Flankenwinkeln bzw. mit einem Radius.

Der Ringwulst des Vorspannelements kann nach der Erfindung in Umfangsrichtung des Vorspannelements einen gewellten bzw. zickzackförmigen Verlauf aufweisen. Bei dieser Ausführungsform kann auch bei einer Ringwulst-Prägestruktur des Vorspannelements ein Rückfördervermögen der Dichtungseinrichtung bei einer rotatorischen Bewegung der beiden Maschinenteile relativ zueinander zuverlässig eingestellt werden. Insgesamt ist dies für die Einsatzbreite der Dichtungsanordnung von Vorteil.

Nach einer bevorzugten Weiterbildung der Erfindung kann das Vorspannelement mehrere der vorgenannten Ringwulste aufweisen. Die Ringwulste sind in diesem Fall in axialer Richtung voneinander beabstandet hintereinanderliegend angeordnet. Dadurch kann einerseits ein besonders großes Dichtvermögen der Dichtungseinrichtung erreicht werden. Die Dichtungsanordnung kann dadurch auch bei Hochdruck- bzw. Höchstdruckanwendungen eingesetzt werden und zugleich bei einer minimierten Verschleißanfälligkeit ein zuverlässiges Rückfördervermögen für ein im Dichtspalt angeordnetes Fluid gewährleisten.

Das Vorspannelement kann in radialer Richtung insbesondere biegesteif, d.h. unelastisch, ausgebildet sein. Im Falle eines in radialer Richtung nach innen spannenden Vorspannelements kann dieses somit nicht oder nur unwesentlich aufgeweitet werden. Im Falle eines in radialer Richtung außenspannenden Vorspannelements kann dieses mithin in radialer Richtung nicht oder nur unwesentlich komprimiert werden. Das Vorspannelement weist somit einen invarianten Außen- bzw. Innenquerschnitt auf. Dadurch kann die Prägestruktur des Vorspannelements mit einer hohen örtlichen Detailauflösung in eine dazu korrespondierende Kontaktpressung der an der Dichtfläche anliegenden Dichtfolie umgesetzt werden.

Nach einer anderen Ausführungsform der Erfindung ist das Vorspannelement (in sich) in radialer Richtung flexibel und elastisch verformbar. Dadurch können bei einem rotierenden Maschinenteil, insbesondere unwuchtbedingte, Vibrationen bzw. bei einem translatorisch bewegten Maschinenteil Exzentrizitäten effektiver gedämpft bzw. kompensiert werden, als dies bei einem in radialer Richtung steifen Vorspannelement der Fall ist. Insgesamt wird dadurch das Dichtvermögen auch bei einer Exzentrizität des jeweils bewegten Maschinenteils verbessert.

Das Vorspannelement kann erfindungsgemäß aus Kunststoff, insbesondere einem Thermoplasten, einem Verbundwerkstoff oder auch aus Metall bestehen. Es versteht sich, dass das Vorspannelement selbst bei Einsatz eines Materials mit einem hohen Elastizitätsmodul in radialer Richtung elastisch verformbar ausgeführt sein kann.

Die Dichtfolie kann nach der Erfindung in Form einer nahtlosen Hülse oder in Form einer gewickelten Hülse ausgeführt sein. Die nahtlose Hülse bietet den Vorteil, dass die Dichtfolie selbst keinerlei Strukturen aufweist, die mit dem durch die Prägestrukturen des Vorspannelements bewirkten Kontaktpressungsverlauf der an der Dichtfläche anliegenden Dichtfolie interferieren. Die Dichtfolie liegt somit im unbelasteten bzw. im nicht-montierten Zustand oberflächenseitig ohne eine makroskopische Strukturierung vor.

Die Dichtungseinrichtung kann ein zur Dichtfolie und zum Vorspannelement separates Stütz- bzw. Halteteil umfassen, über das die Dichtungseinrichtung an oder in der Dichtungshaltestruktur abgestützt und/oder befestigt ist. Das Stütz- bzw. Halteteil kann insbesondere auch zur Befestigung eines oder beider axialer Endabschnitte der Dichtfolie dienen. Erfindungsgemäß kann das Stütz- bzw. Halteteil in dem Falle, dass das Vorspannelement in radialer Richtung steif ausgeführt ist, insbesondere in radialer Richtung elastisch verformbar sein.

Dadurch kann eine Exzentrizität des bewegten Maschinenteils kompensiert werden.

Die Dichtfolie weist erfindungsgemäß vorzugsweise zumindest einen Endabschnitt auf, der sich radial in Richtung auf das die Dichtungshaltestruktur aufweisende Maschinenteil erstreckt. Der Endabschnitt kann dabei an/in der Dichtungshaltestruktur befestigt sein. Dadurch kann eine schwimmende Lagerung der Dichtungseinrichtung erreicht werden. Dies ist insbesondere im Hinblick auf die Kompensation einer Exzentrizität des bewegbar gelagerten Maschinenteils vorteilhaft. Darüber hinaus wird dadurch ein unerwünschtes Mitdrehen der Dichtungseinrichtung verhindert.

Der Endabschnitt der Dichtfolie kann eine Ausnehmung aufweisen, über die eine Hochdruckseite des Dichtspalts mit einem zwischen der Dichtfolie und dem Vorspannelement und/oder dem Stützelement angeordneten Freiraum fluidisch verbunden ist. Dadurch kann eine druckbedingte Aktivierung der Dichtfolie erreicht werden. Dies ist insbesondere bei einem Einsatz der Dichtungsanordnung bei Hydraulikantrieben von Vorteil.

In dem Falle, dass die Dichtungseinrichtung in radialer Richtung innendichtend, und mithin das Vorspannelement in radialer Richtung innenspannend ausgeführt ist, erstreckt sich die Dichtfolie zumindest abschnittsweise durch eine ringförmige Ausnehmung des Vorspannelements hindurch. Die Dichtfolie kann dabei das Vorspannelement zumindest abschnittsweise in axialer Richtung überdecken. Die Dichtungseinrichtung kann alternativ radial außendichtend ausgeführt sein.

Die Dichtfolie kann insbesondere aus Polytetrafluoräthylen oder aus einem anderen elastisch verformbaren Werkstoff, insbesondere einem Polyolefin, bestehen. Die Dichtfolie kann zur weiteren Verringerung ihres Reibungswiderstands an der Dichtfläche Trockenschmierstoffe, insbesondere Graphit- oder PTFE-Partikel (Polytetrafluoräthylen), aufweisen.

Es versteht sich, dass alternativ oder zusätzlich das die Dichtfläche aufweisende Maschinenteil im Bereich der Dichtfläche eine Gleitbeschichtung aufweisen kann.

Nach der Erfindung kann eines der beiden Maschinenteile eine Drehwelle und das jeweils andere der beiden Maschinenteile ein die Drehwelle umgreifendes Gehäuse- und/oder Lagerteil sein. Alternativ kann eines der beiden Maschinenteile ein Zylinder und das jeweils andere der beiden Maschinenteile ein im Zylinder in Richtung der Bewegungsachse translatorisch (hin- und her) bewegbarer Kolben sein.

Nachstehend wird die Erfindung anhand von in der Zeichnung wiedergegebener Ausführungsbeispiele näher erläutert.

In der Zeichnung zeigen:
- Fig.1: eine nicht zur Erfindung zählende Dichtungsanordnung mit einer Dichtungseinrichtung, die eine elastisch verformbare Dichtfolie und ein Vorspannelement mit einer gewindeartigen Prägestruktur umfasst, durch das die Dichtfolie mit einem zur Prägestruktur korrespondierenden Kontaktpressungsverlauf gegen die Dichtfläche gepresst ist, in einer teilweise geschnittenen Ansicht;
- Fig. 2: eine nicht zur Erfindung zählende Dichtungsanordnung , die zu der Dichtungsanordnung gemäß Fig. 1 ähnlich ist und bei der die Dichtungseinrichtung ein separates Stützteil für das Vorspannelement umfasst;
- Fig. 3: eine weitere Rotationsdichtungsanordnung, die nicht zur Erfindung zählt und bei der das Vorspannelement als eine Schraubenfeder ausgeführt ist, in einer teilweise geschnittenen Ansicht;
- Fig. 4: eine nicht zur Erfindung zählene Dichtungsanordnung, bei der die Dichtfolie mit einer druckausgleichenden Durchgangsausnehmung versehen ist, in einer Schnittdarstellung; und
- Fig. 5: eine erfindungsgemäße Dichtungsanordnung mit zwei Maschinenteilen, die entlang einer Bewegungsachse relativ zueinander translatorisch bewegbar sind, wobei das die Dichtfolie gegen die Dichtfläche spannende Vorspannelement in radialer Richtung innenseitig zwei Ringwülste aufweist, in einer teilweise geschnittenen Darstellung;

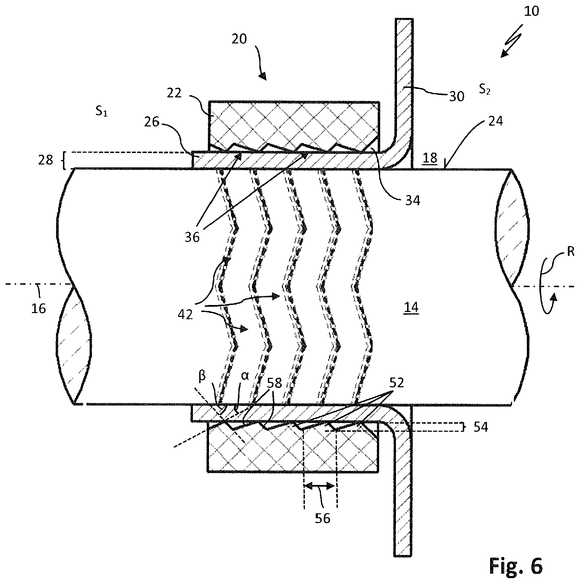

- Fig. 6: eine Dichtungsanordnung, mit zwei Maschinenteilen, die um eine Bewegungsachse relativ zueinander rotatorisch bewegbar angeordnet sind, und mit einer Dichtungseinrichtung, bei der das Vorspannelement innenseitig eine Prägestruktur mit mehreren Ringwulsten aufweist, die in axialer Richtung voneinander beabstandet hintereinanderliegend angeordnet sind, wobei die Ringwulste in Umfangsrichtung des Vorspannelements jeweils einen zickzackförmigen Verlauf aufweisen, so dass die Dichtfolie an der Dichtfläche eines der beiden Maschinenteile mit einem dazu korrespondierenden zickzackförmigen Kontaktpressungsverlauf anliegt, in einer teilweise geschnittenen Darstellung; und
- Fig. 7: eine zu der Dichtungsanordnung gemäß Fig. 6 ähnliche Dichtungsanordnung, bei der die Ringwulste jeweils eine balligen bzw. gerundete Querschnittsform aufweisen, in einer teilweise geschnittenen Darstellung.

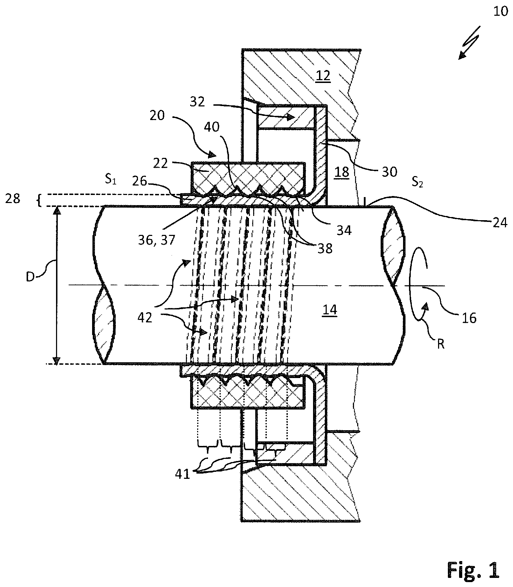

**Fig. 1** zeigt eine nicht zur Erfindung zählende Dichtungsanordnung **10,** die als eine Rotationsdichtungsanordnung ausgebildet ist. Die Dichtungsanordnung 10 weist ein erstes Maschinenteil **12** und ein zweites Maschinenteil **14** auf. Die beiden Maschinenteile 12, 14 sind um eine mit **16** bezeichnete Bewegungsachse, d.h. eine Drehachse) gegeneinander rotierbar gelagert. Das erste Maschinenteil 12 ist hier als ein Gehäuse und das zweite Maschinenteil 14 ist hier als eine gegenüber dem Gehäuse rotierbare Drehwelle ausgebildet. Das Gehäuse kann in an sich bekannter Weise eine in der Zeichnung nicht näher wiedergegebene Lagerung für die Drehwelle ausbilden. Die beiden Maschinenteile 12, 14 sind unter Ausbildung eines zwischen den beiden Maschinenteilen 12, 14 angeordneten Dichtspalts **18** voneinander in radialer Richtung beabstandet angeordnet. Zur Abdichtung des Dichtspalts 18 dient eine Dichtungseinrichtung **20.** Die Dichtungseinrichtung umfasst ein Vorspannelement **22** und ein Dichtelement, das durch das Vorspannelement 22 in radialer Richtung gegen eine Dichtfläche **24** des zweiten Maschinenteils 14 gepresst ist. Das Vorspannelement 22 kann (zäh-) elastisch verformbar oder alternativ auch in radialer Richtung steif, d.h. nicht oder nur unwesentlich elastisch verformbar, sein. Ein elastisch verformbares Vorspannelement 22 ist dann zu bevorzugen, wenn eine Exzentrizität des rotierbar gelagerten Maschinenteils 14 kompensiert werden soll.

Das Dichtelement ist durch eine elastisch verformbare Dichtfolie **26** gebildet, d.h. als ein Foliendichtelement ausgebildet. Die Dichtfolie 26 weist im unbelasteten bzw. nicht-montierten Zustand beiderseitig eine glatte Oberfläche ohne makroskopische Strukturen auf. Die Dichtfolie 26 kann insbesondere aus Polytetrafluoräthylen (PTFE) oder einem anderen geeigneten Dichtungswerkstoff, beispielsweise einem Polyolefin, bestehen. Die Dichtfolie 26 weist eine Dicke **28** zwischen 0,1 und maximal 2 Millimetern auf. Die Dicke 28 der Dichtfolie 26 kann dabei insbesondere auf den Durchmesser **D** des bewegbar gelagerten Maschinenteils 14 abgestimmt sein und beträgt vorzugsweise maximal ein Hundertstel des Durchmessers D des bewegbar gelagerten Maschinenteils 14.

Die Dichtfolie 26 liegt in Form einer nahtlosen Hülse vor. Ein Endabschnitt **30** der Dichtfolie 26 ist im Sinne eines Dichtkragens abgewinkelt und erstreckt sich von der Dichtfläche 24 nach radial außen in Richtung des ersten Maschinenteils 12. Das erste Maschinenteil 12 weist eine nutartige Dichtungshaltestruktur **32** auf, die einer drehfesten Befestigung der Dichtungseinrichtung 20 am ersten Maschinenteil 12 dient. Bei dem in Fig. 1 gezeigten Ausführungsbeispiel ist allein die Dichtfolie 26 über ihren Endabschnitt 30 bzw. Dichtkragen an bzw. in der Dichtungshaltestruktur 32 geklemmt gehalten angeordnet. Dadurch ist eine zuverlässige Abdichtung des Dichtspalts (in axialer Richtung) gewährleistet. Es versteht sich, dass die Dichtfolie 26 am Vorspannelement 22 stirnseitig unmittelbar anliegen kann.

Das Vorspannelement 22 liegt mit seiner innenseitigen Umfangsfläche **34** an der Dichtfolie 26 unmittelbar an und presst diese in radialer Richtung gegen die Dichtfläche 24 des zweiten Maschinenteils 14.

Die dichtfolienseitige Umfangsfläche 34 des Vorspannelements 22 weist eine Prägestruktur **36** auf. Das Vorspannelement 34 weist somit dichtfolienseitig eine von einer glatten Mantelfläche abweichende (Oberflächen-)Topografie auf. Die Prägestruktur 36 des Vorspannelements 22 ist vorliegend als ein Gewinde **37** mit Gewindespitzen **38** und einem einzigen Gewindegang bzw. einer einzigen Gewindenut **40** ausgebildet. Die Gewindenut 40 des Gewindes 37 erstreckt sich mit mehreren vollständigen Windung **41** in axialer Richtung um die Bewegungsachse 16 der beiden Maschinenteile 12, 14. Es versteht sich, dass das Gewinde 37 auch mehrgängig ausgeführt sein kann. In diesem Fall weist das Gewinde 37 somit mehrere Gewindenuten 40 auf, die parallel zueinander schraubenförmig um die Bewegungsachse 16 herum verlaufend angeordnet sind. Das Vorspannelement 22 prägt sich aufgrund der radialen Kontaktpressung gegen die Dichtfolie 26 mit seiner Prägestruktur 36 in die elastisch verformbare Dichtfolie 26 ein. Die Dichtfolie 26 wird dadurch in denjenigen Bereichen, die die Gewindespitzen 38 des Gewindes 37 des Vorspannelements 22 radial überdecken, stärker gegen die Dichtfläche 24 des zweiten Maschinenteils 14 gepresst, als in denjenigen Bereichen, die die Gewindenut 40 in radialer Richtung überdecken bzw. innerhalb der Gewindenut 40 liegen. Insgesamt liegt die Dichtfolie 26 dadurch mit einem zu der Prägestruktur 36 korrelierenden gewindeartigen Flächen- bzw. Kontaktpressungsverlauf **42** an der zylindrischen Dichtfläche 24 des zweiten Maschinenteils 14 an. Die hier gewindeförmige Prägestruktur 36 des Vorspannelements 22 wird somit in Form des Kontaktpressungsverlaufs 42 der Dichtfolie 26 an der Dichtfläche 24 abgebildet. Der Kontaktpressungsverlauf 42 ist in Abb. 1 grafisch durch die gestrichelten Linien veranschaulicht. Die räumliche Dichte der Linien korreliert mit der Größe der jeweiligen Kontaktpressung der Dichtfolie 26 gegen die Dichtfläche 24 pro Flächeneinheit. Durch den gewindeartigen bzw. schraubenförmigen Kontaktpressungsverlauf 42 der Dichtfolie gegen die Dichtfläche kann ein im Dichtspalt angeordnetes Fluid, beispielsweise Schmieröl, - je nach Drehrichtung des zweiten Maschinenteils 14 - zwischen der Dichtfolie 26 und der Dichtfläche 24 in axialer Richtung zu einer der beiden Seiten **S₁**, **S₂** der Dichtungseinrichtung 20 rückgefördert, d. h. in axialer Richtung zurückbewegt, werden. Ist das Fluid, d. h. das Schmiermittel, beispielsweise auf der rechten Seite **S₂** der Dichtungseinrichtung bevorratet, so kann zur Seite S1 gelecktes Fluid durch die Rotation des zweiten Maschinenteils 14 in Bewegungsrichtung **R** in axialer Richtung zur zweiten Seite S₂ der Dichtungseinrichtung 10 rückgefördert werden.

Die Korrelation der Prägestruktur 36 des Vorspannelements mit dem Kontaktpressungsverlauf 42 der Dichtfolie 26 gegen die Dichtfläche 24 verhält sich antiproportional zur elastischen Verformbarkeit des Vorspannelements 22, zur Dicke 28 der Dichtfolie 26 und proportional zur Verformbarkeit der Dichtfolie. Das Vorspannelement 22 ist deshalb bezüglich seiner elastischen Verformbarkeit und der durch das Vorspannelement aufgebrachten radialen Spannkraft pro Flächeneinheit der Dichtfolie auf die Verformbarkeit sowie Dicke 28 der Dichtfolie 26 abgestimmt.

Das Vorspannelement 22 kann aus einem geeigneten Kunststoff, insbesondere einem Thermoplasten, einem Verbundwerkstoff, oder aus Metall bestehen. Das Vorspannelement kann beispielsweise als Spritzgussteil oder als ein im 3D-Druckverfahren erzeugtes Bauteil ausgeführt sein.

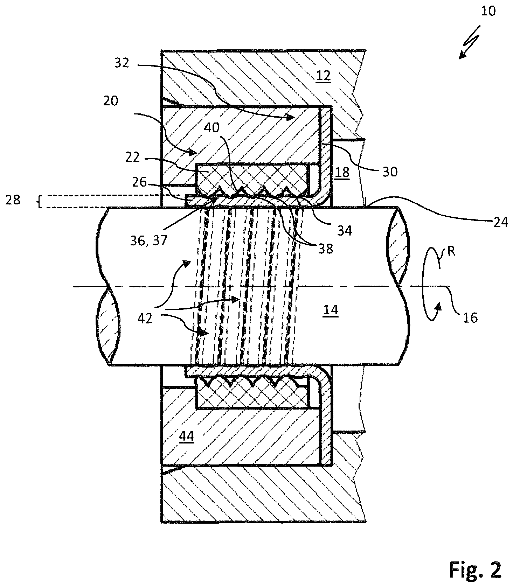

In **Fig. 2** ist eine weitere Dichtungsanordnung 10 gezeigt, die nicht zur Erfinundung zählt. Diese Dichtungsanordnung 10 unterscheidet sich von der vorstehend im Zusammenhang mit Fig.1 erläuterten Dichtungsanordnung 10 im Wesentlichen darin, dass die Dichtungseinrichtung 20 neben dem Vorspannelement 22 und der Dichtfolie 26 zusätzlich ein zu den anderen Bauteilen separat ausgeführtes Stützelement **44** aufweist, über das das Vorspannelement 22 am ersten Maschinenteil 12 in radialer Richtung abgestützt ist. Das Stützelement 44 kann in/an der Dichtungshaltestruktur des ersten Maschinenteils 12 befestigt sein.

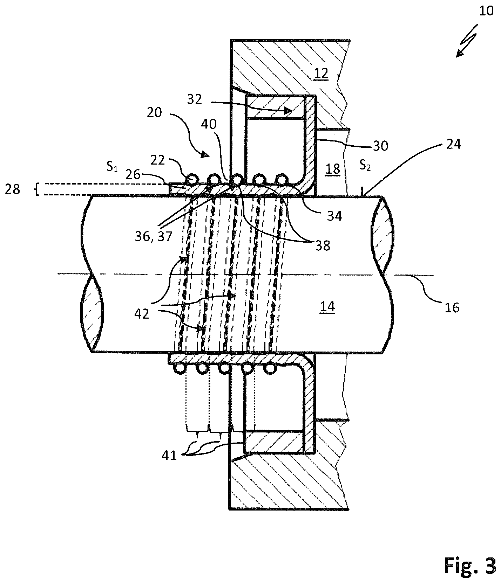

**Fig. 3** zeigt eine weitere Dichtungsanordnung 10, die sich von der in Abb. 1 gezeigten Dichtungsanordnung 10 im Wesentlichen darin unterscheidet, dass das Vorspannelement 22 als eine Schraubenfeder ausgebildet ist. Das zweite Maschinenteil 14 erstreckt sich durch die in axialer Richtung hintereinanderliegend angeordneten Windungen 41 der Schraubenfeder hindurch. Die Schraubenfeder besteht vorzugsweise aus Metall, kann aber auch aus Kunststoff gebildet sein. Die Schraubenfeder erlaubt eine besonders einfache Montage der Rotationsdichtungsanordnung 10. Schraubenfedern sind darüber hinaus am Markt in beliebigen Größen und mit unterschiedlichen Kennlinien verfügbar, so dass die Rotationsdichtungsanordnung mit einem geringem Aufwand herzustellen ist. Aufgrund der Tatsache, dass die Dichtungseinrichtung 20 alleinig über die elastisch verformbare Dichtfolie 26 an der Dichtungshaltestruktur 32 des ersten Maschinenteils 12 befestigt ist, ist die Dichtungseinrichtung 20 insgesamt schwimmend gelagert. Dies erlaubt die Kompensation einer Exzentrizität (Radialbewegungen) des zweiten Maschinenteils 14. Darüber hinaus können durch die Dichtungseinrichtung 22 axial gerichtete Relativbewegungen der beiden Maschinenteile 12, 14 aufgenommen werden, ohne dass dadurch das Dichtvermögen der Dichtungseinrichtung 20 kompromittiert wird.

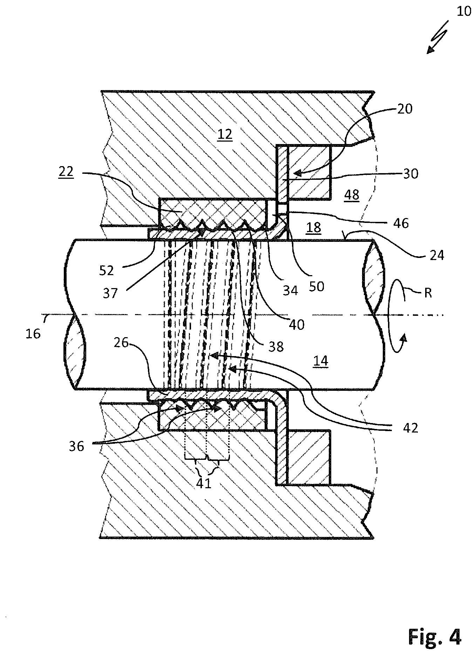

**Fig. 4** zeigt einen Schnitt durch eine weitere Dichtungsanordnung 10, die sich von der in Fig. 2 gezeigten Dichtungsanordnung im Wesentlichen darin unterscheidet, dass die Dichtfolie 26 im Bereich ihres axialen Endabschnitts 30 eine (Durchgangs-) Ausnehmung **46** aufweist. Bei einer Druckbeaufschlagung eines im Dichtspalt angeordneten Fluids auf der mit **48** bezeichneten Hochdruckseite der Dichtungsanordnung 10 bzw. des Dichtspalts kann das Fluid in axialer Richtung über die Ausnehmung 46 in einen zwischen der Dichtfolie 26 und dem Vorspannelement 22 angeordneten ringförmigen Freiraum **50** strömen. Dadurch kann ein unerwünschter Druckgradient über den radialerstreckten Endabschnitt 30 der Dichtfolie 26 vermieden, d.h. ein Druckausgleich erreicht, werden. Die Dichtfolie 26 kann darüber hinaus druckaktiviert werden, d.h. durch das druckbeaufschlagte Fluid zusätzlich in radialer Richtung gegen die Dichtfläche 24 des zweiten Maschinenteils 14 gepresst werden. Das Gewinde des Vorspannelements 22 kann einenends in einen radial umlaufenden Dicht- oder Ringwulst **52** übergehen, um eine vollständige Abdichtfunktion der Dichtfolie 26 selbst bei Hochdruckanwendungen der Dichtungsanordnung 10 zu gewährleisten. Der Ringwulst 52 weist hier einen symmetrischen Querschnitt mit einem Radius auf.

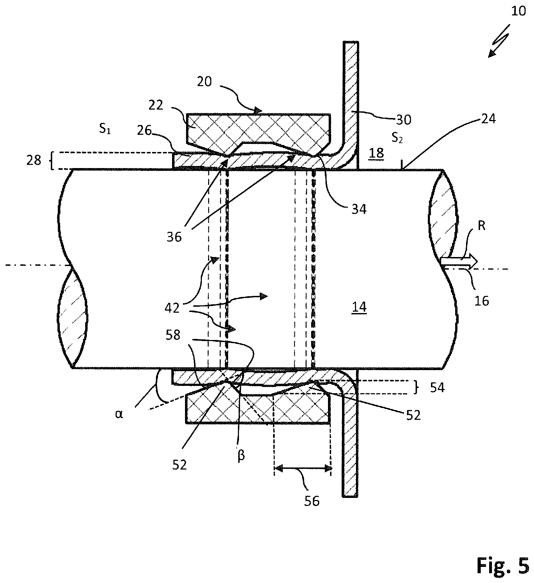

In **Fig. 5** ist eine erfindungsgemäße Dichtungsanordnung 10 in einer teilweise freigestellten Ansicht gezeigt, die sich von der in Fig. 1 gezeigten Dichtungsanordnung im Wesentlichen darin unterscheidet, dass das Vorspannelement eine Prägestruktur 36 mit Ringwulsten 52 aufweist. Die Ringwulste können bezüglich ihrer Höhe **54,** ihrer axialen Breite **56**, der jeweiligen Flankenwinkel **α, β** ihrer Seitenflanken **58** relativ zur Dichtfläche 24 und ihrer Flankenform (bauchig vs. plan) unterschiedlich ausgestaltet sein, um einen jeweils gewünschten Kontaktpressungsverlauf 42 der Dichtfolie 26 gegen die Dichtfläche 24 einzustellen. Das gezeigte Maschinenteil 14 ist hier vorzugsweise translatorisch gegenüber dem in Figur 5 nicht dargestellten radial äußeren Maschinenteil bewegbar. Zu beachten ist, dass die ersten Flankenwinkel α der der ersten Seite S₁ der Dichtungsanordnung zuweisenden Seitenflanken 58 der Ringwulste 52 hier jeweils kleiner sind, als die zweiten Flankenwinkel **β** der der zweiten Seite S₂ der Dichtungsanordnung bzw. Dichtungseinrichtung zuweisenden Seitenflanken 58 der Ringwulste 52. Die Ringwulste 52 weisen mithin einen asymmetrischen Querschnitt auf. Bei einer Bewegung des zweiten Maschinenteils 14 in Bewegungsrichtung R relativ zum ersten Maschinenteil (nicht gezeigt) kann dadurch ein auf der ersten Seite S₁ im Dichtspalt 18 angeordnetes Fluid vereinfacht zur zweiten Seite S₂ in axialer Richtung rückgefördert werden.

In **Fig. 6** ist eine weitere erfindungsgemäße Dichtungsanordnung 10 gezeigt, bei der das zweite Maschinenteil 14 relativ zum ersten Maschinenteil (nicht gezeigt; siehe Fig. 1) um die Bewegungsachse 16 rotatorisch verstellbar ist. Die Ringwulste 52 der Prägestruktur des Vorspannelements 22 weisen jeweils Seitenflanken 58 auf, die mit unterschiedlichen Flankenwinkeln α, β zur Dichtfläche 24 schräg verlaufend angeordnet sind. Um eine Rückförderung von im Dichtspalt 18 angeordnetem Fluid bei einer rotatorischen Verstellung des zweiten Maschinenteils 14 um die Bewegungsachse 16 von der ersten Seite S₁ zur zweiten Seite S₂ der Dichtungsanordnung 10 zu ermöglichen, weisen die Ringwulste 52 des Vorspannelements 22 hier in Umfangsrichtung des Vorspannelements 22 zickzackförmigen Verlauf auf. Es versteht sich, dass die Rückförderung des Fluids bei der in Fig. 6 gezeigten Dichtungsanordnung auch bei einer translatorischen Verstellbarkeit der beiden Maschinenteile 12, 14 relativ zueinander ermöglicht ist.

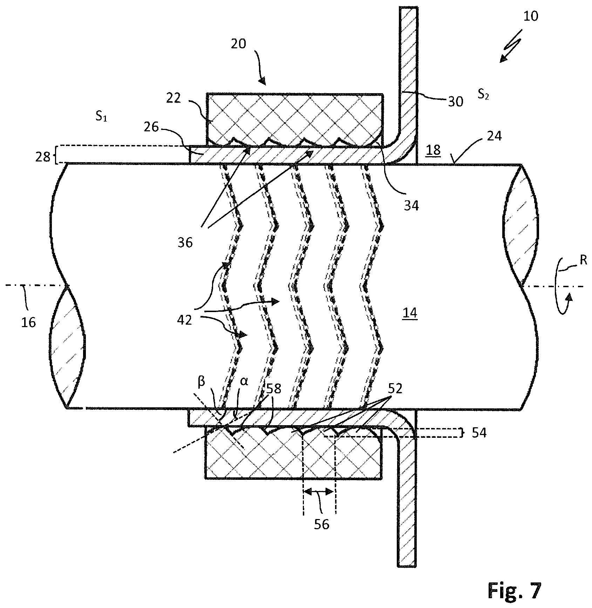

Die Ringwulste 52 können gemäß der in **Fig. 7** gezeigten Dichtungsanordnung 10 zumindest teilweise oder auch insgesamt eine ballige asymmetrische Querschnittsform aufweisen.

Nach in der Zeichnung nicht näher gezeigten Ausführungsbeispielen können die Dichtungsanordnungen auch eine in radialer Richtung außendichtende Dichtungseinrichtung 22 aufweisen. In diesem Fall ist die Dichtfolie 26 radial nach außen gegen die Dichtfläche 24 des radial äußeren Maschinenteils 12 gespannt.

## Patentansprüche

1. Dichtungsanordnung (10) mit zwei Maschinenteilen (12, 14), die entlang einer oder um eine Bewegungsachse (16) gegeneinander bewegbar angeordnet sind, wobei eines der beiden Maschinenteile (12, 14) eine Dichtungshaltestruktur (32) und das jeweils andere Maschinenteil (12, 14) eine Dichtfläche (24) ausbildet,
mit einer an/in der Dichtungshaltestruktur (32) gehaltenen Dichtungseinrichtung (20) zum dynamischen Abdichten eines zwischen den beiden Maschinenteilen (12, 14) ausgebildeten Dichtspalts (18), wobei die Dichtungseinrichtung (20) ein Dichtelement und ein zu dem Dichtelement separates Vorspannelement (22) umfasst, mittels dessen das Dichtelement in radialer Richtung gegen die Dichtfläche (24) des jeweils anderen Maschinenteils (12, 14) gespannt ist,
wobei das Dichtelement durch eine elastisch verformbare Dichtfolie (26) gebildet ist, wobei
das Vorspannelement (22) dichtfolienseitig eine Prägestruktur (36) in Form eines Ringwulstes (52) ausbildet und wobei sich die Prägestruktur (36) derart in die Dichtfolie (26) eindrückt, dass die Dichtfolie (26) mit einem zur Prägestruktur (36) des Vorspannelements (22) korrespondierenden Kontaktpressungsverlauf (42) an der Dichtfläche (24) anliegt,
**dadurch gekennzeichnet, dass**
der Ringwulst (52) eine erste und eine zweite Flanke (58) aufweist, die zur Dichtfläche (24) mit unterschiedlichen Flankenwinkeln α, β schräg verlaufend angeordnet sind..

2. Dichtungsanordnung (10) nach Anspruch 1, **dadurch gekennzeichnet, dass** der Ringwulst (52) in Umfangsrichtung des Vorspannelements (22) einen gewellten oder zickzackförmigen Verlauf aufweist.

3. Dichtungsanordnung (10) nach einem der vorhergehenden Ansprüche,
**dadurch gekennzeichnet, dass** das Vorspannelement (22) in radialer Richtung elastisch verformbar oder steif, d.h. auf dessen Querschnitt bezogen im Wesentlichen unverformbar, ausgebildet ist.

4. Dichtungsanordnung (10) nach einem der vorhergehenden Ansprüche,
**dadurch gekennzeichnet, dass** das Vorspannelement (22) aus Kunststoff, einem Verbundwerkstoff, einem elastomeren Werkstoff oder aus Metall besteht.

5. Dichtungsanordnung (10) nach einem der vorhergehenden Ansprüche,
**dadurch gekennzeichnet, dass** die Dichtfolie (26) in Form einer nahtlosen Hülse ausgebildet ist.

6. Dichtungsanordnung (10) nach einem der vorhergehenden Ansprüche,
**dadurch gekennzeichnet, dass** die Dichtungseinrichtung (20) ein Stützelement (44) aufweist, über das das Vorspannelement (22) an dem die Dichtungshaltestruktur (32) aufweisenden Maschinenteil (12, 14) befestigt und/oder abgestützt ist.

7. Dichtungsanordnung (10) nach einem der vorhergehenden Ansprüche,
**dadurch gekennzeichnet, dass** die Dichtfolie (26) einen Endabschnitt (30) aufweist, der sich radial in Richtung auf das die Dichtungshaltestruktur (32) aufweisende Maschinenteil (12, 14) erstreckt und welcher vorzugsweise an der Dichtungshaltestruktur des einen Maschinenteils befestigt ist.

8. Dichtungsanordnung (10) nach Anspruch 7, **dadurch gekennzeichnet, dass** der Endabschnitt (30) der Dichtfolie (26) eine Ausnehmung (46) aufweist, über die eine Hochdruckseite des Dichtspalts mit einem zwischen der Dichtfolie (26) und dem Vorspannelement (22) und/oder dem Stützelement (44) angeordneten Freiraum (50) fluidisch verbunden ist.

9. Dichtungsanordnung (10) nach einem der vorhergehenden Ansprüche,
**dadurch gekennzeichnet, dass** die Dichtfolie (26) aus Polytetrafluoräthylen oder aus einem anderen elastisch verformbaren Werkstoff, insbesondere einem Polyolefin, besteht.

10. Dichtungsanordnung (10) nach einem der vorhergehenden Ansprüche,
**dadurch gekennzeichnet, dass** die Dichtfolie (26) eine Dicke (28) zwischen 0,15 mm und 2 mm aufweist, wobei die Dicke (28) vorzugsweise auf den Durchmesser (D) des bewegbar gelagerten Maschinenteils (12, 14) ausgerichtet ist.

11. Dichtungsanordnung (10) nach einem der vorhergehenden Ansprüche,
**dadurch gekennzeichnet, dass** die Dichtungseinrichtung (20) in radialer Richtung innendichtend oder außendichtend ausgeführt ist.

12. Dichtungsanordnung (10) nach einem der vorhergehenden Ansprüche,
**dadurch gekennzeichnet, dass** eines der beiden Maschinenteile (12, 14) eine Drehwelle oder ein translatorisch bewegbarer Kolben und das jeweils andere der beiden Maschinenteile ein die Drehwelle/den Kolben umgreifendes Gehäuse- und/oder Lagerteil ist.

## Claims

1. Seal arrangement (10) having two machine parts (12, 14), which are arranged so as to be movable relative to one another along or about a movement axis (16),
one of the two machine parts (12, 14) forming a seal holding structure (32) and the other machine part (12, 14) forming a sealing surface (24), having a sealing device (20) which is held on/in the seal holding structure (32) for dynamically sealing a sealing gap (18) which is formed between the two machine parts (12, 14),
the sealing device (20) comprising a sealing element and a biasing element (22) which is separate from the sealing element, by means of which biasing element the sealing element is biased in the radial direction against the sealing surface (24) of the other machine part (12, 14),
the sealing element being formed by an elastically deformable sealing film (26), the biasing element (22) forming, on the sealing-film side, an embossed structure (36) in the form of an annular bead (52) and the embossed structure (36) impressing the sealing film (26) such that the sealing film (26) abuts the sealing surface (24) with a contact pressure progression (42) corresponding to the embossed structure (36) of the biasing element (22), **characterized in that** the annular bead (52) has a first and a second flank (58) which are arranged obliquely to the sealing surface (24) at different flank angles α and β.

2. Seal arrangement (10) according to claim 1, **characterized in that** the annular bead (52) has a corrugated or zigzag progression in the circumferential direction of the biasing element (22).

3. Seal arrangement (10) according to any of the preceding claims, **characterized in that** the biasing element (22) is formed so as to be, in the radial direction, elastically deformable or rigid, i.e. substantially non-deformable in relation to the cross section thereof.

4. Seal arrangement (10) according to any of the preceding claims, **characterized in that** the biasing element (22) consists of plastics material, a composite material, an elastomeric material or of metal.

5. Seal arrangement (10) according to any of the preceding claims, **characterized in that** the sealing film (26) is formed as a seamless sleeve.

6. Seal arrangement (10) according to any of the preceding claims, **characterized in that** the sealing device (20) has a support element (44) by means of which the biasing element (22) is fastened to and/or supported on the machine part (12, 14) having the seal holding structure (32).

7. Seal arrangement (10) according to any of the preceding claims, **characterized in that** the sealing film (26) has an end portion (30) which extends radially toward the machine part (12, 14) having the seal holding structure (32), and which is preferably fastened to the seal holding structure of the one machine part.

8. Seal arrangement (10) according to claim 7, **characterized in that** the end portion (30) of the sealing film (26) has a recess (46) by means of which a high-pressure side of the sealing gap is fluidly connected to a space (50) which is arranged between the sealing film (26) and the biasing element (22) and/or the support element (44).

9. Seal arrangement (10) according to any of the preceding claims, **characterized in that** the sealing film (26) consists of polytetrafluoroethylene or of another elastically deformable material, in particular a polyolefin.

10. Seal arrangement (10) according to any of the preceding claims, **characterized in that** the sealing film (26) has a thickness (28) of between 0.15 mm and 2 mm, the thickness (28) preferably being aligned with the diameter (D) of the movably mounted machine part (12, 14).

11. Seal arrangement (10) according to any of the preceding claims, **characterized in that** the sealing device (20) is designed to be internally sealing or externally sealing in the radial direction.

12. Seal arrangement (10) according to any of the preceding claims, **characterized in that** one of the two machine parts (12, 14) is a rotary shaft or a translationally movable piston and the other one of the two machine parts is a housing part and/or bearing part which encloses the rotary shaft/piston.

## Revendications

1. Agencement d'étanchéité (10) comprenant deux parties de machine (12, 14) qui sont disposées de manière à pouvoir être déplacées l'une par rapport à l'autre le long ou autour d'un axe de déplacement (16), l'une des deux parties de machine (12, 14) constituant une structure de retenue de joint d'étanchéité (32) et l'autre partie de machine respective (12, 14) constituant une surface d'étanchéité (24),
comprenant un dispositif d'étanchéité (20) retenu contre/dans la structure de retenue de joint d'étanchéité (32) pour réaliser l'étanchéité dynamique d'un interstice d'étanchéité (18) réalisé entre les deux parties de machine (12, 14), le dispositif d'étanchéité (20) comprenant un élément d'étanchéité et un élément de précontrainte (22) séparé de l'élément d'étanchéité, au moyen duquel l'élément d'étanchéité est serré dans la direction radiale contre la surface d'étanchéité (24) de l'autre partie de machine respective (12, 14), l'élément d'étanchéité étant formé par une feuille d'étanchéité déformable élastiquement (26),
l'élément de précontrainte (22) constituant, du côté de la feuille d'étanchéité, une structure en relief (36) sous la forme d'un bourrelet annulaire (52), et la structure en relief (36) pénétrant dans la feuille d'étanchéité (26) de telle sorte que la feuille d'étanchéité (26) s'applique avec une étendue de pressage par contact (42) correspondant à la structure en relief (36) de l'élément de précontrainte (22) contre la surface d'étanchéité (24),
**caractérisé en ce que**
le bourrelet annulaire (52) présente un premier et un deuxième flanc (58) qui sont disposés de manière à s'étendre obliquement par rapport à la surface d'étanchéité (24) avec des angles de flancs différents α, β.

2. Agencement d'étanchéité (10) selon la revendication 1, **caractérisé en ce que** le bourrelet annulaire (52) présente dans la direction périphérique de l'élément de précontrainte (22) une allure ondulée ou en forme de zigzag.

3. Agencement d'étanchéité (10) selon l'une quelconque des revendications précédentes,
**caractérisé en ce que** l'élément de précontrainte (22) est réalisé dans la direction radiale de manière déformable élastiquement ou de manière rigide, c'est-à-dire de manière sensiblement non déformable, rapporté à sa section transversale.

4. Agencement d'étanchéité (10) selon l'une quelconque des revendications précédentes,
**caractérisé en ce que** l'élément de précontrainte (22) se compose de plastique, d'un matériau composite, d'un matériau élastomère ou de métal.

5. Agencement d'étanchéité (10) selon l'une quelconque des revendications précédentes,
**caractérisé en ce que** la feuille d'étanchéité (26) est réalisée sous la forme d'un manchon sans couture.

6. Agencement d'étanchéité (10) selon l'une quelconque des revendications précédentes,
**caractérisé en ce que** le dispositif d'étanchéité (20) présente un élément de support (44) par le biais duquel l'élément de précontrainte (22) est fixé et/ou supporté sur la partie de machine (12, 14) présentant la structure de retenue de joint d'étanchéité (32).

7. Agencement d'étanchéité (10) selon l'une quelconque des revendications précédentes,
**caractérisé en ce que** la feuille d'étanchéité (26) présente une portion d'extrémité (30) qui s'étend radialement dans la direction de la partie de machine (12, 14) présentant la structure de retenue de joint d'étanchéité (32) et qui est de préférence fixée à la structure de retenue de joint d'étanchéité de l'une des parties de machine.

8. Agencement d'étanchéité (10) selon la revendication 7, **caractérisé en ce que** la portion d'extrémité (30) de la feuille d'étanchéité (26) présente un évidement (46) par le biais duquel un côté haute pression de l'interstice d'étanchéité est connecté fluidiquement à un espace libre (50) disposé entre la feuille d'étanchéité (26) et l'élément de précontrainte (22) et/ou l'élément de support (44).

9. Agencement d'étanchéité (10) selon l'une quelconque des revendications précédentes,
**caractérisé en ce que** la feuille d'étanchéité (26) se compose de polytétrafluoroéthylène ou d'un autre matériau déformable élastiquement, notamment d'une polyoléfine.

10. Agencement d'étanchéité (10) selon l'une quelconque des revendications précédentes,
**caractérisé en ce que** la feuille d'étanchéité (26) présente une épaisseur (28) comprise entre 0,15 mm et 2 mm, l'épaisseur (28) étant de préférence orientée vers le diamètre (D) de la partie de machine supportée de manière déplaçable (12, 14).

11. Agencement d'étanchéité (10) selon l'une quelconque des revendications précédentes,
**caractérisé en ce que** le dispositif d'étanchéité (20) est réalisé de manière à réaliser l'étanchéité vers l'intérieur ou vers l'extérieur dans la direction radiale.

12. Agencement d'étanchéité (10) selon l'une quelconque des revendications précédentes,
**caractérisé en ce que** l'une des deux parties de machine (12, 14) est un arbre rotatif ou un piston déplaçable en translation et l'autre respective des deux parties de machine est une partie de boîtier et/ou de palier venant en prise autour de l'arbre rotatif/du piston.
